(19) Europäisches Patentamt
European Patent Office
Office européen des brevets

(11) **EP 4 012 620 A1**

(12) **DEMANDE DE BREVET EUROPEEN**

(43) Date de publication:
**15.06.2022 Bulletin 2022/24**

(21) Numéro de dépôt: **21213450.6**

(22) Date de dépôt: **09.12.2021**

(51) Classification Internationale des Brevets (IPC):
**G06N 3/04** *(2006.01)* **G06N 3/08** *(2006.01)*

(52) Classification Coopérative des Brevets (CPC):
**G06N 3/0454; G06N 3/0481; G06N 3/08**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **14.12.2020 FR 2013155**

(71) Demandeur: **Commissariat à l'Energie Atomique et aux Energies Alternatives**
**75015 Paris (FR)**

(72) Inventeurs:
• **SEDDIK, Mohamed El Amine**
**91120 Palaiseau (FR)**
• **TAMAAZOUSTI, Mohamed**
**91191 Gif-sur-Yvette Cedex (FR)**

(74) Mandataire: **Marks & Clerk France**
**Immeuble "Visium"**
**22, avenue Aristide Briand**
**94117 Arcueil Cedex (FR)**

(54) **MÉTHODE D'APPRENTISSAGE AUTOMATIQUE PAR TRANSFERT**

(57) Méthode, mise en œuvre par ordinateur, d'apprentissage automatique par transfert comprenant les étapes de :
- Entrainer (401) un réseau de neurones artificiel ($R_S$) à résoudre un premier problème source de classification, à partir d'au moins un premier ensemble de données d'apprentissage source ($DA_S$),
- Mettre à jour (404) les poids synaptiques de la dernière couche du réseau de neurones artificiel entrainé, à partir d'un second ensemble de données d'apprentissage cible ($DA_C$), pour résoudre un second problème cible de classification,
- Pour chaque neurone de la dernière couche du réseau de neurones artificiel associé à une classe, lesdits poids synaptiques étant proportionnels à la moyenne centrée normalisée des représentations du second ensemble de données d'apprentissage cible ($DA_C$) extraites de la dernière couche cachée du réseau de neurones artificiel et appartenant à ladite classe.

Fig. 4

**Description**

L'invention concerne le domaine des méthodes d'apprentissage automatique et en particulier celui des réseaux de neurones artificiels.

L'invention concerne plus précisément le domaine de l'apprentissage automatique par transfert ou « transfer learning » en anglais qui vise à transférer des connaissances d'une tâche source vers une tâche cible. La problématique générale de l'apprentissage par transfert peut être vue comme la capacité d'un système à reconnaitre et appliquer des connaissances, apprises à partir de tâches antérieures, sur de nouvelles tâches ou domaines partageant des similitudes.

Dans le cas de réseaux de neurones artificiels, l'apprentissage par transfert consiste, par exemple, à apprendre à résoudre un problème particulier à partir d'un réseau ayant au préalable appris à résoudre un problème plus général.

Dans le domaine de l'apprentissage automatique par transfert appliqué aux réseaux de neurones artificiels, un problème à résoudre consiste à optimiser un réseau pré-appris pour résoudre un problème général afin de l'adapter à un problème plus particulier et ce en limitant les ressources computationnelles aussi bien en terme de temps de calcul alloué à l'apprentissage du problème particulier que de ressources mémoires pour stocker les données utilisées pour réaliser l'apprentissage.

Autrement dit, un objectif recherché dans ce domaine est de pouvoir réaliser un apprentissage automatique pour un problème particulier en bénéficiant de l'apprentissage d'un réseau pour un problème plus général et ainsi en limitant la complexité de mise en œuvre de l'apprentissage du problème particulier.

Un autre problème réside dans la disponibilité de grandes quantités de données d'apprentissage qui sont généralement nécessaires pour réaliser un apprentissage automatique performant.

Pour certaines applications, les données d'apprentissage peuvent être couteuses à acquérir et ne sont pas toujours disponibles en grande quantité. Ainsi, il existe un besoin de recycler l'utilisation de réseaux de neurones pré-appris sur des bases de données d'apprentissage générales, avec un minimum d'adaptation, pour les utiliser afin de résoudre un problème spécifique à partir de nouvelles données d'apprentissage en quantité limitée.

Ce besoin est d'autant plus présent que de nombreux modèles de réseaux pré-entrainés sont à présent disponibles en ligne. Un réseau pré-entrainé est un réseau de neurones dont les paramètres (les poids du réseau ou coefficients synaptiques, notamment) ont été déterminés à l'issue d'un apprentissage sur une base de données d'apprentissage prédéfinie et pour résoudre un problème donné.

En particulier, il peut s'agir d'un problème de classification. Par exemple, un réseau pré-entrainé à reconnaitre des voitures dans une scène peut être utilisé par la suite pour résoudre un problème plus spécifique de classifier les types de voitures identifiés.

Dans ce contexte, un autre problème auquel est confronté l'utilisateur est de choisir le réseau pré-entrainé qui est le plus adapté à la résolution du problème spécifique lorsque plusieurs réseaux et/ou plusieurs bases de données d'apprentissage sont disponibles.

Un problème similaire consiste à sélectionner les données d'apprentissage qui permettent d'adapter au mieux les performances du réseau pré-entrainé pour résoudre le problème initial.

De façon générale, l'optimisation du réseau pré-entrainé dans l'objectif de résoudre un problème spécifique doit être réalisée de sorte à limiter le nombre d'opérations et la place mémoire occupée.

Dans le domaine du transfert d'apprentissage, les solutions connues consistent en général à effectuer un apprentissage classique, au moyen d'un algorithme de rétro-propagation basé sur une méthode du gradient, pour au moins la dernière couche cachée du réseau de neurones pré-appris en adaptant la dernière couche du réseau au nouveau problème spécifique à résoudre.

Cette méthode présente l'inconvénient d'être couteuse en opérations et en place mémoire car elle nécessite de réaliser un apprentissage complet d'au moins la dernière couche cachée et ce pour tous les réseaux pré-appris et/ou toutes les nouvelles données d'apprentissage disponibles.

L'invention vise à résoudre les différents problèmes précités en proposant un critère d'optimisation qui vise à déterminer les paramètres de la dernière couche cachée d'un réseau pré-appris pour un problème source, à partir de nouvelles données d'apprentissage utilisées pour résoudre un problème cible.

Pour cela, l'invention consiste à remplacer un apprentissage classique du réseau par une mise à jour des poids synaptiques de la dernière couche à partir des nouvelles données d'apprentissage et du problème cible. L'invention s'applique avantageusement pour des problèmes de classification.

Elle permet ainsi de limiter le cout des opérations du second apprentissage en le remplaçant par une optimisation directe des paramètres de la dernière couche du réseau.

L'invention permet ainsi la sélection, avec un coût de traitement réduit, du réseau pré-appris et/ou des données d'apprentissage permettant de résoudre le problème cible avec les meilleures performances.

L'invention a pour objet une méthode, mise en œuvre par ordinateur, d'apprentissage automatique par transfert comprenant les étapes de :

-   Entrainer un réseau de neurones artificiel à résoudre un premier problème source de classification, à partir d'au moins un premier ensemble de données d'apprentissage source,

- Mettre à jour les poids synaptiques de la dernière couche du réseau de neurones artificiel entrainé, à partir d'un second ensemble de données d'apprentissage cible, pour résoudre un second problème cible de classification,

- Pour chaque neurone de la dernière couche du réseau de neurones artificiel associé à une classe, lesdits poids synaptiques étant proportionnels à la moyenne centrée normalisée des représentations du second ensemble de données d'apprentissage cible extraites de la dernière couche cachée du réseau de neurones artificiel et appartenant à ladite classe.

Selon un aspect particulier, la méthode selon l'invention comprend en outre une étape de remplacer la dernière couche du réseau de neurones artificiel entrainé par une couche spécifique au second problème cible de classification.

Selon un aspect particulier de l'invention, la couche spécifique est une couche basée sur la fonction softmax.

Selon un aspect particulier de l'invention, pour mettre à jour les poids synaptiques de la dernière couche du réseau de neurones artificiel entrainé, les données d'apprentissage cible du second ensemble sont propagées de l'entrée dudit réseau jusqu'à sa dernière couche cachée de manière à pouvoir en extraire lesdites représentations.

Selon un aspect particulier de l'invention, le réseau de neurones artificiel est entrainé pour plusieurs ensembles de données d'apprentissage source, afin de produire plusieurs réseaux de neurones entrainés, la mise à jour des poids synaptiques est réalisée pour chaque réseau de neurones entrainé et la méthode comprend en outre une étape de sélection du réseau de neurone entrainé qui présente les meilleures performances pour résoudre le second problème cible de classification.

Selon un aspect particulier de l'invention, le second ensemble de données d'apprentissage cible (est de taille inférieure à un ensemble de données d'apprentissage source.

Selon un aspect particulier de l'invention, la mise à jour des poids synaptiques est réalisée pour plusieurs ensembles de données d'apprentissage cible, le second problème cible est identique au premier problème source et la méthode comprend en outre une étape de sélection de l'ensemble de données d'apprentissage cible qui permet d'obtenir les performances les moins bonnes pour résoudre le second problème cible de classification.

Dans une variante de réalisation, la méthode selon l'invention comprend en outre une nouvelle étape d'entrainement du réseau de neurones artificiels à partir de l'ensemble de données d'apprentissage cible sélectionné ou d'une combinaison de l'ensemble de données d'apprentissage cible sélectionné et de l'ensemble de données d'apprentissage source.

Selon un aspect particulier de l'invention, la dernière couche cachée du réseau de neurones artificiels comporte une fonction d'activation impaire, par exemple une fonction tangente hyperbolique.

L'invention a aussi pour objet un dispositif de calcul pour implémenter un réseau de neurones artificiel ayant appris à résoudre un problème cible de classification à l'aide d'une méthode de transfert d'apprentissage selon l'invention.

L'invention a aussi pour objet un programme d'ordinateur comportant des instructions pour l'exécution de la méthode selon l'invention, lorsque le programme est exécuté par un processeur ainsi qu'un support d'enregistrement lisible par un processeur sur lequel est enregistré un programme comportant des instructions pour l'exécution de la méthode selon l'invention, lorsque le programme est exécuté par un processeur.

D'autres caractéristiques et avantages de la présente invention apparaîtront mieux à la lecture de la description qui suit en relation aux dessins annexés suivants.

[Fig. 1] la figure 1 représente un schéma général d'un exemple de réseau de neurones artificiel configuré pour résoudre un problème général de classification dit problème source,

[Fig. 2] la figure 2 représente un schéma du réseau de neurones artificiel de la figure 1 modifié pour résoudre un problème spécifique de classification, dit problème cible,

[Fig. 3] la figure 3 représente les deux dernières couches du réseau de la figure 2,

[Fig. 4] la figure 4 illustre, sur un organigramme, les étapes de mise en œuvre d'une méthode d'apprentissage par transfert selon un premier mode de réalisation de l'invention,

[Fig. 5] la figure 5 illustre, sur un organigramme, les étapes de mise en œuvre d'une méthode d'apprentissage par transfert selon un deuxième mode de réalisation de l'invention,

[Fig. 6] la figure 6 illustre, sur un organigramme, les étapes de mise en œuvre d'une méthode d'apprentissage par transfert selon un troisième mode de réalisation de l'invention,

[Fig. 7] la figure 7 illustre un exemple comparatif de résultats obtenus avec une méthode de l'art antérieur et avec la méthode selon l'invention.

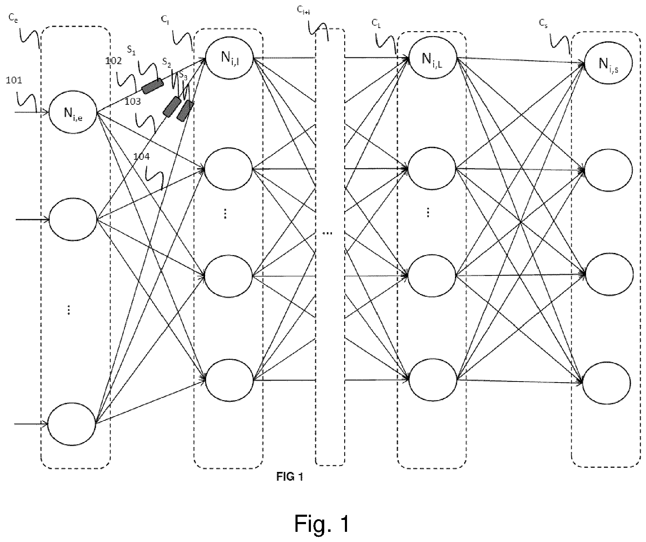

La figure 1 représente un schéma général d'un réseau de neurones artificiels, par exemple un réseau de neurones convolutif. Un réseau de neurones est classiquement composé de plusieurs couches $C_e, C_l, C_{l+i}, C_L, C_s$ de neurones interconnectés. Le réseau comporte au moins une couche d'entrée $C_e$ et une couche de sortie $C_s$ et plusieurs couches intermédiaires $C_l, C_{l+i}, C_L$, encore appelées couches cachées. Les neurones $N_{i,e}$ de la couche d'entrée $C_e$ reçoivent des données d'entrée. Les données d'entrée peuvent être de natures différentes selon l'application visée. Par exemple, les données d'entrée sont des pixels d'une image. Un réseau de neurones a pour fonction générale d'apprendre à résoudre un problème donné, par exemple un problème de classification, de régression, de reconnaissance, d'identification. Un réseau de neurones est, par exemple, utilisé dans le domaine de la classification d'image ou de la reconnaissance d'image ou plus généralement la reconnaissance de caractéristiques qui peuvent être visuelles, audio, textuelles.

Chaque neurone d'une couche est connecté, par son entrée et/ou sa sortie, à tous les neurones de la couche précédente ou suivante. Plus généralement un neurone peut n'être connecté qu'à une partie des neurones d'une autre couche, notamment dans le cas d'un réseau convolutionnel. Les connexions entre deux neurones $N_{i,e}$, $N_{i,l}$ de deux couches successives se font à travers des synapses artificielles $S_1, S_2, S_3$ qui peuvent être réalisées, notamment, par des mémoires numériques ou par des dispositifs memristifs. Les coefficients des synapses sont optimisés grâce à un mécanisme d'apprentissage du réseau de neurones. Le mécanisme d'apprentissage a pour objectif l'entrainement du réseau de neurones à résoudre un problème défini. Ce mécanisme comporte deux phases distinctes, une première phase de propagation de données de la couche d'entrée vers la couche de sortie et une seconde phase de rétro-propagation d'erreurs de la couche de sortie vers la couche d'entrée avec, pour chaque couche, une mise à jour des poids des synapses. Les erreurs calculées par les neurones de sortie à l'issue de la phase de propagation de données sont liées au problème à résoudre. Il s'agit, de manière générale, de déterminer une erreur entre la valeur d'un neurone de sortie et une valeur attendue ou une valeur cible en fonction du problème à résoudre.

Lors de la première phase de propagation de données, des données d'apprentissage, par exemple des images ou séquences d'images de référence, sont fournies en entrée des neurones de la couche d'entrée et propagées dans le réseau. Chaque neurone met en œuvre, pendant cette première phase, une fonction d'intégration des données reçues qui consiste, dans le cas d'un réseau convolutionnel, à calculer une somme des données reçues pondérées par les coefficients des synapses. Autrement dit, chaque neurone réalise une opération de convolution sur une taille de filtre de convolution correspondant à la taille de la sousmatrice de neurones de la couche précédente auxquels il est connecté. Chaque neurone propage ensuite le résultat de la convolution vers les neurones de la couche suivante. Selon les modèles de neurones choisis, la fonction d'intégration qu'il réalise peut varier.

Les neurones $N_{i,s}$ de la couche de sortie $C_s$ exécutent un traitement supplémentaire en ce qu'ils calculent une erreur entre la valeur de sortie du neurone $N_{i,s}$ et une valeur attendue ou une valeur cible qui correspond à l'état final du neurone de la couche de sortie que l'on souhaite obtenir en relation avec les données d'entrée d'apprentissage et le problème à résoudre par le réseau. Par exemple, si le réseau doit résoudre un problème de classification, l'état final attendu d'un neurone correspond à la classe qu'il est censé identifier dans les données d'entrée.

Plus généralement, à chaque problème particulier à résoudre (classification, régression, prédiction) on associe une ou plusieurs fonction(s) de coût ou fonction objective à optimiser (par minimisation ou maximisation). Un objectif de la phase de rétro-propagation d'erreurs est de rechercher les paramètres du réseau qui optimisent (par exemple minimisent) la fonction objective.

La fonction objective dépend des données propagées entre chaque couche du réseau depuis la couche d'entrée mais aussi d'autres paramètres, par exemple les identifiants des classes auxquelles appartiennent les données dans le cas d'un problème de classification.

Lors de la seconde phase de rétro-propagation d'erreurs, les neurones de la couche de sortie $C_s$ transmettent les erreurs calculées aux neurones de la couche précédente $C_{l+1}$ qui calculent une erreur locale à partir de l'erreur rétro-propagée de la couche précédente et transmettent à leur tour cette erreur locale à la couche précédente $C_l$. En parallèle, chaque neurone calcule, à partir de l'erreur locale, une valeur de mise à jour des poids des synapses auxquelles il est connecté et met à jour les synapses. Le processus se poursuit pour chaque couche de neurones jusqu'à l'avant dernière couche qui est chargée de mettre à jour les poids des synapses qui la relient à la couche d'entrée $C_e$.

La figure 1 représente un exemple de réseau de neurones donné à titre illustratif et non limitatif. De façon générale, chaque couche intermédiaire d'un réseau peut être connectée totalement ou partiellement à une autre couche.

Les données d'entrée du réseau peuvent être organisées sous la forme de matrices. Le réseau peut être configuré pour générer en sortie un score ou une information de classification ou tout autre type de sortie adaptée selon le problème à résoudre.

Par exemple, si les données d'entrée sont des images ou des caractéristiques extraites d'images ou de séquences d'images, un réseau de neurone peut être configuré pour reconnaitre les objets extraits des images et les classifier selon différentes classes ou catégories prédéfinies. Le problème résolu par le réseau est alors un problème de classification.

Un problème de classification peut aussi être appliqué à des données textuelles, des documents, des pages Internet, des données audio.

Le problème à résoudre par le réseau de neurones peut être de nature très diverse. Il peut s'agir d'un problème de classification d'éléments dans différentes catégories dans l'optique d'apprendre à reconnaitre ces éléments.

Le problème peut aussi consister en l'approximation d'une fonction inconnue ou en une modélisation accélérée d'une fonction connue mais complexe à calculer ou encore un problème de régression ou de prédiction.

La présente invention est applicable plus particulièrement à un problème de classification.

On considère un réseau appelé réseau source, du type de celui décrit à la figure 1, qui est pré-entrainé sur un ou plusieurs ensemble(s) de données d'apprentissage pour résoudre un problème de classification source.

Par exemple, le problème source consiste à identifier, dans une scène capturée via une ou plusieurs image(s), la présence de voitures. Autrement dit, ce problème source consiste à classifier les objets présents dans la scène selon différentes catégories, l'une d'elle étant la catégorie voiture.

Pour cela on utilise une ou plusieurs base(s) de données d'images d'apprentissage qui sont utilisées pour réaliser un apprentissage du réseau, de la façon décrite ci-dessus, de sorte à optimiser les poids synaptiques de toutes les couches pour que le réseau apprenne à classifier les objets correspondant à des voitures.

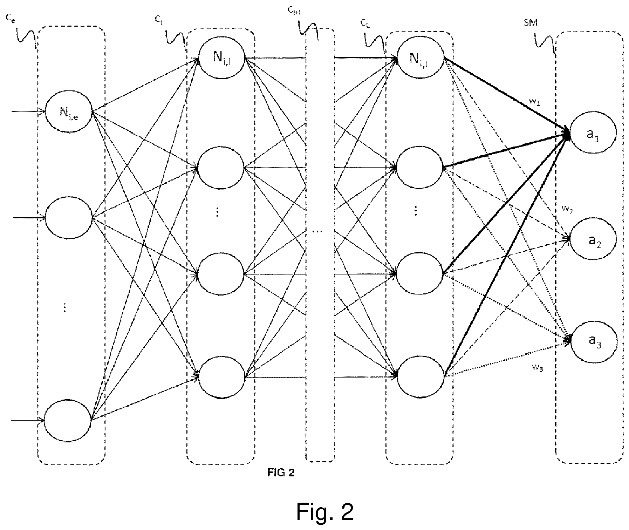

La figure 2 schématise un deuxième réseau de neurones, appelé réseau cible, qui a pour objectif d'apprendre à résoudre un problème de classification cible, qui est en général plus spécifique que le problème de classification source. Par exemple, le problème cible consiste à classifier les voitures selon leur type ou leur marque.

Un objectif général de l'apprentissage automatique par transfert est d'exploiter le réseau source optimisé de la figure 1 pour exploiter ses connaissances afin de résoudre le problème cible et ce, sans réaliser un apprentissage complet sur la même quantité de données d'apprentissage que pour le réseau source.

Pour cela, une méthode possible consiste à remplacer la dernière couche du réseau source par une couche de sortie SM spécifique au problème cible. Autrement dit, la couche de sortie SM du réseau cible obtenue contient autant de neurones de sortie a1,a2,a3 que de catégories associées au problème cible (par exemple correspondant aux différentes catégories de voitures que l'on cherche à classifier).

Ensuite, on réalise un apprentissage partiel de ce réseau pour mettre à jour uniquement les poids w1,w2,w3 de la dernière couche qui sont les plus spécifiques au problème visé. Cet apprentissage partiel est réalisé à partir de nouvelles données d'apprentissage en utilisant un algorithme de rétro-propagation de la même façon que pour le réseau source de la figure 1, à la différence près que seuls les poids de la dernière couche sont mis à jour.

Un objectif de l'invention est de réaliser l'adaptation du réseau source en réseau cible sans réaliser l'apprentissage partiel, c'est-à-dire sans utiliser d'algorithme de rétro-propagation complet.

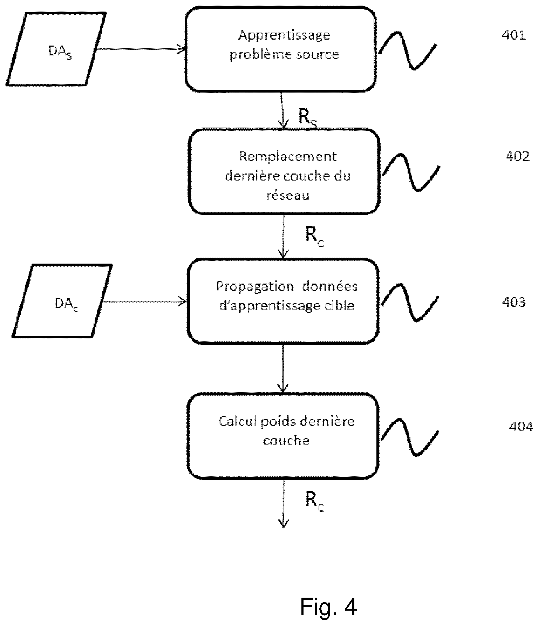

La figure 4 illustre, sur un organigramme, les étapes de mise en œuvre d'une méthode de transfert d'apprentissage automatique selon un premier mode de réalisation de l'invention.

La première étape 401 consiste, comme expliqué ci-dessus pour la figure 1, à réaliser un apprentissage ou entrainement complet du réseau de neurones source $R_S$ à partir d'un ensemble de données d'apprentissage source $DA_S$ dans l'objectif de résoudre un problème de classification source.

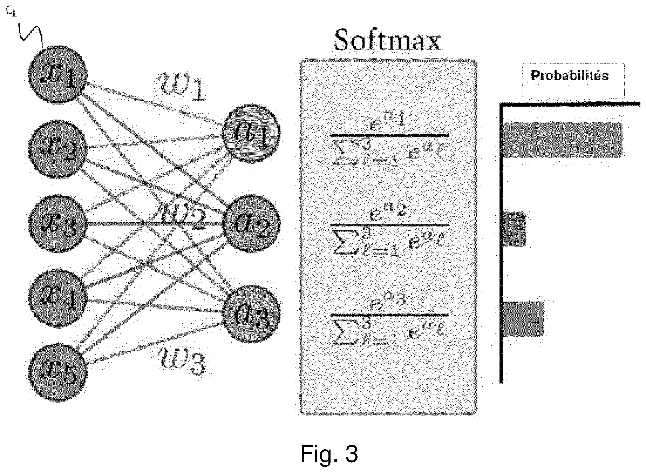

La deuxième étape 402 consiste à remplacer la dernière couche du réseau source $R_S$ par une couche spécifique au problème cible, afin de générer une architecture d'un réseau cible $R_c$ Le réseau cible $R_c$ diffère du réseau source $R_S$ uniquement de par sa dernière couche. Avantageusement, la dernière couche du réseau cible est basée sur la fonction SoftMax tel que représenté à la figure 3.

La figure 3 représente, sur un exemple non limitatif, les deux dernières couches d'un réseau cible $R_c$, c'est-à-dire la couche finale SoftMax et la dernière couche cachée $C_L$. Sur cet exemple, la couche SoftMax comporte trois neurones a1,a2,a3 associés à trois catégories du problème cible de classification. Chacun de ces trois neurones est lié à un vecteur de poids synaptiques $w_1,w_2,w_3$.

La troisième étape 403 prend en entrée un nouvel ensemble de données d'apprentissage destinées à être utilisées pour résoudre le problème cible de classification. Typiquement ce nouvel ensemble de données est de taille réduite par rapport au premier ensemble de données d'apprentissage source. Par exemple, il s'agit de données acquises dans un contexte industriel pour résoudre un problème spécifique, l'acquisition de ces données étant couteuse et donc la quantité de données disponible étant limitée. Au contraire, les données d'apprentissage source correspondent à un problème source plus général et sont en conséquence disponibles en plus grande quantité. Par exemple, il s'agit de bases de données disponibles publiquement telles que les bases de données ImageNet ou d'autres bases publiques destinées à l'apprentissage de réseaux de neurones pour la classification.

La troisième étape 403 consiste à propager les données d'apprentissage cible de l'entrée du réseau cible jusqu'à la dernière couche cachée $C_L$ puis d'extraire les représentations de ces données de cette dernière couche cachée. Sur l'exemple de la figure 3, les représentations extraites correspondent aux caractéristiques x1,x2,x3,x4,x5.

A partir de ces représentations, dans une quatrième étape 404, on calcule les valeurs mises à jour des poids synaptiques $w_1,w_2,w_3$ de la dernière couche comme étant proportionnels à la moyenne centrée normalisée des représentations x1 ,x2,x3,x4,x5 et appartenant à chaque classe respective a1 ,a2,a3.

Plus précisément, les données d'apprentissage cible utilisées sont labellisées en fonction de la catégorie à laquelle elles appartiennent. Ces labels sont propagés avec les données jusqu'à la dernière couche cachée.

Ensuite, on calcule, pour chaque classe associée à un label, les moyennes $m_l$ des représentations sur l'ensemble des données d'apprentissage correspondant à ce label.

On calcule ensuite les moyennes centrées via la formule suivante : $$\widetilde{m_l} = m_l - \frac{1}{k}\sum_{j=1}^{k} m_j$$, avec k le nombre de classes.

On calcule enfin les poids de la dernière couche via la formule : $$w_l = Q_l . \widetilde{m_l},$$ avec $Q_l$ un facteur de normalisation qui est, par exemple, égal ou proportionnel à $$Q_l = \frac{1}{\|\widetilde{m_l}\|}.$$

Cette approximation du calcul des poids synaptiques permet d'éviter le recours à un algorithme de rétropropagation basé sur une descente de gradient qui présente un cout important en nombre d'opérations.

L'approximation proposée est en particulier valable pour une couche finale basée sur la fonction Soft-Max et pour des fonctions d'activation impaires (par exemple tangente hyperbolique, sinus ou linéaire) pour la dernière couche cachée du réseau.

On rappelle que la fonction Softmax est définie par :

$$f(A)_j = \frac{e^{a_j}}{\sum_{k=1}^{K} e^{a_k}}$$, un vecteur dont les composantes correspondent à chaque classe du problème de classification.

Cette approximation est obtenue en analysant le comportement théorique de la couche Softmax pour des réseaux classifieurs.

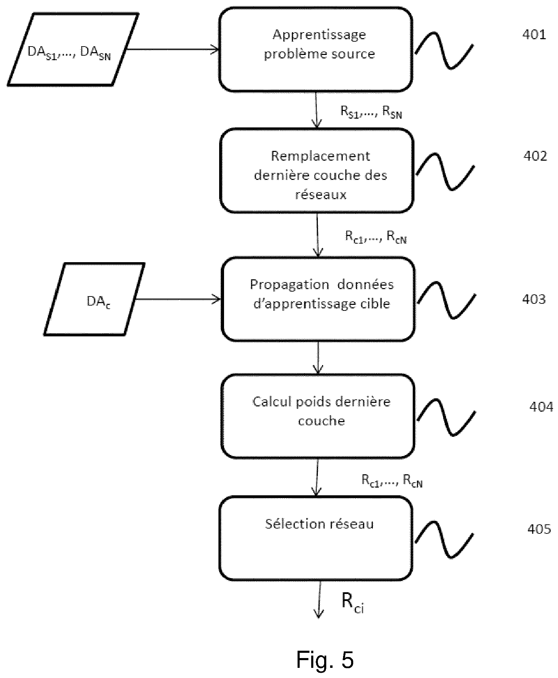

La figure 5 décrit un deuxième mode de réalisation de l'invention qui a pour objectif de sélectionner le réseau de neurones le plus adapté au problème cible à résoudre parmi plusieurs réseaux pré-appris pour un problème source.

En effet, lorsque plusieurs bases de données d'apprentissage sont disponibles, un problème à résoudre consiste à déterminer quel réseau pré-appris pour quelle base de données d'apprentissage est le plus adapté pour résoudre le problème cible.

Dans ce deuxième mode de réalisation, le réseau de neurones source est entrainé à résoudre le problème source pour plusieurs ensembles de données d'apprentissage $DA_{S1}$,..., $DA_{SN}$. Dans une variante, plusieurs réseaux de neurones sources ayant des architectures différents sont entrainés pour différents ensembles de données d'apprentissage $DA_{S1}$,..., $DA_{SN}$.

A l'issue de l'étape 401 d'apprentissage on obtient donc plusieurs réseaux de neurones source préappris $R_{S1}$,..., $R_{SN}$ correspondant chacun à un ensemble de données d'apprentissage par exemple à une base de données d'images publique dans le cas d'un problème de classification d'images, et/ou à une architecture particulière,

L'étape 402 est appliqué à chaque réseau préappris en remplaçant la dernière couche par une couche spécifique au problème cible. On applique ensuite les étapes 403 et 404 du procédé décrit à la figure 4 à chaque réseau pour obtenir plusieurs réseaux cibles $R_{c1}$,..., $R_{cN}$ à partir d'un même ensemble de données d'apprentissage cible $DA_C$.

Dans une dernière étape 405, on compare les performances de classification de tous les réseaux cibles $R_{c1}$,..., $R_{cN}$ et on retient le réseau cible $R_{ci}$ qui présente les meilleures performances pour résoudre le problème cible.

L'étape 405 est, par exemple, réalisée en utilisant des données de test labellisées et en exécutant une phase d'inférence de chaque réseau cible pour ces données de test.

A la fin de la phase d'inférence, la couche Soft-Max du réseau cible calcule une probabilité ou un score de classification (comme illustré à la figure 3).

Le réseau cible le plus performant est celui qui permet d'obtenir les scores de classification les plus fiables pour les mêmes données de test.

Ainsi, ce deuxième mode de réalisation permet de sélectionner le réseau pré-appris le plus adapté au problème cible sans besoin de réaliser un apprentissage complet de la dernière couche de chaque réseau préappris.

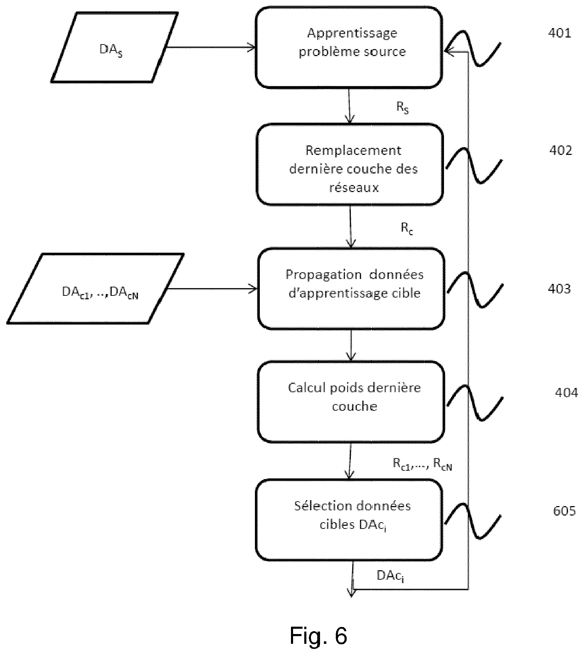

La figure 6 décrit un troisième mode de réalisation de l'invention qui a pour objectif de sélectionner, parmi plusieurs ensembles de données d'apprentissage cible disponibles, celui qui permet le mieux d'améliorer l'apprentissage du réseau pré-appris pour résoudre le problème cible.

Dans ce troisième mode de réalisation, le problème cible est identique au problème source et donc la dernière couche du réseau cible contient autant de neurones que la dernière couche du réseau source (contrairement aux modes de réalisation précédents).

Un objectif de ce troisième mode de réalisation est de déterminer quel ensemble de données d'apprentissage cible est le plus susceptible de modifier le modèle pré-appris du réseau source. Afin d'éviter de refaire un entrainement complet du réseau source pour chaque nouvel ensemble de données d'apprentissage cible disponibles, on utilise le réseau cible pour déterminer un critère de sélection des données d'apprentissage cible les plus pertinentes.

Dans ce troisième mode de réalisation, l'étape 401 est identique à celle décrite à la figure 4 et est exécutée pour un seul ensemble de données d'apprentissage source afin de produire un modèle de réseau source pré-appris $R_S$.

L'étape 402 consiste à remplacer la dernière couche du réseau source par une couche SoftMax mais cette nouvelle couche comporte autant de neurones que la dernière couche du réseau source de sorte à adresser le même problème source.

Les étapes 403,404 sont exécutées pour plusieurs ensembles de données d'apprentissage cible $DA_{c1}, .., DA_{cN}$. Ce scénario correspond à une situation où de nouvelles données d'apprentissage cible sont acquises au cours du temps et sont disponibles pour mettre à jour le réseau source. Par exemple, dans le cas d'une voiture autonome, celle-ci peut acquérir en permanence de nouvelles images de son environnement qui peuvent constituer de nouvelles données d'apprentissage.

A l'issue de l'étape 404, on obtient plusieurs réseaux cibles $R_{c1},..., R_{cN}$ correspondant à chaque ensemble de données d'apprentissage cible.

On applique ensuite une étape 605 finale pour sélectionner le réseau cible, et donc l'ensemble de données d'apprentissage cible associé qui permet de s'éloigner le plus du modèle initialement pré-appris pour générer le réseau source Rs. Autrement dit, à partir de données test, on exécute une phase d'inférence pour chaque réseau cible et on compare les scores de classification déterminés par la couche SoftMax.

On retient ensuite le réseau cible qui donne les scores les moins bons. En effet, un mauvais score de classification traduit le fait que les nouvelles données d'apprentissage cible utilisées sont fortement éloignées des données d'apprentissage source DAs utilisées pour générer le modèle du réseau source Rs.

A l'inverse, si le réseau cible permet d'obtenir un bon score de classification alors que le calcul des poids de la dernière couche est basée sur un critère de moyenne centrée normalisée, alors cela signifie que les données utilisées pour mettre à jour ces poids ne sont pas très nouvelles par rapport aux données source.

En sélectionnant les données d'apprentissage cible $DAc_i$ correspondant au réseau cible le moins performant en termes de classification, cela signifie que ces données d'apprentissage sont réellement nouvelles par rapport aux données d'apprentissage source $DA_S$.

Ainsi, il est utile de réaliser un nouvel entrainement complet du réseau source Rs à partir de ces nouvelles données d'apprentissage cible $DAc_i$ pour mettre à jour le modèle du réseau source. On reboucle alors à l'étape 401 pour mettre à jour le modèle du réseau source Rs. Le nouvel entrainement du réseau source Rs peut également être réalisé en reprenant la base de données d'apprentissage source $DA_s$ et en la complétant avec les nouvelles données d'apprentissage cible $DAc_i$.

Un avantage de ce troisième mode de réalisation est qu'il évite la réalisation d'un nouvel entrainement complet du réseau source pour chaque nouveau jeu de données d'apprentissage disponible lorsque ces nouvelles données sont régulièrement disponibles au cours du temps. L'invention permet de définir un critère pour évaluer la nouveauté des nouvelles données disponibles afin de sélectionner uniquement ces données pour réaliser un nouvel apprentissage complet du réseau source.

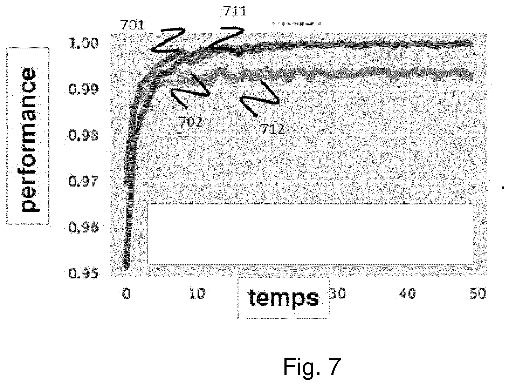

La figure 7 représente un exemple comparatif de performances obtenues pour une méthode d'apprentissage classique par rétro-propagation et pour une méthode selon l'invention.

Le diagramme de la figure 7 représente les performances de classification en fonction de la quantité de données testées au cours du temps respectivement pour les deux méthodes précitées, pendant l'apprentissage et pendant une phase de test.

Les courbes 701,711 correspondent aux performances obtenues au cours d'un apprentissage respectivement avec une méthode par rétro-propagation (701) et avec une méthode selon l'invention (711).

Les courbes 702,712 correspondent aux performances obtenues au cours d'une phase d'inférence avec des données de test pour un réseau appris respectivement avec une méthode par rétro-propagation (702) et avec une méthode selon l'invention (712).

Les résultats de la figure 7 sont obtenus avec un réseau dont la dernière couche cachée comporte une fonction d'activation du type tangente hyperbolique.

Les courbes du diagramme de la figure 7 montrent que l'invention permet d'obtenir des performances de classification similaires à celles obtenues avec un apprentissage classique.

L'invention peut être mise en œuvre en tant que programme d'ordinateur comportant des instructions pour son exécution. Le programme d'ordinateur peut être enregistré sur un support d'enregistrement lisible par un processeur.

La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en œuvre des aspects des techniques décrites ici. Les moyens ou ressources informatiques peuvent notamment être distribués ("*Cloud computing*"), éventuellement selon des technologies de pair-à-pair. Le code logiciel peut être exécuté sur n'importe quel processeur approprié (par exemple, un microprocesseur) ou cœur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en œuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités.

Le réseau de neurones cible peut être implémenté sur un dispositif de calcul basé, par exemple, sur un processeur embarqué. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »). Le dispositif de calcul peut utiliser un ou plusieurs circuits électroniques dédiés ou un circuit à usage général. La technique de l'invention peut se réaliser sur une machine de calcul reprogrammable (un processeur ou un micro-contrôleur par exemple) exécutant un programme comprenant une séquence d'instructions, ou sur une machine de calcul dédiée (par exemple un ensemble de portes logiques comme un FPGA ou un ASIC, ou tout autre module matériel).

L'invention s'applique dans de nombreux domaines dans lesquels il existe un besoin de résoudre un problème de classification.

Par exemple, l'invention s'applique à l'analyse de données images ou vidéos ou plus généralement multimédia pour résoudre un problème de classification. Dans ce cas les données d'entrée du réseau sont des données multimédia.

L'invention peut être implémentée dans des dispositifs embarqués, comprenant plusieurs couches de Silicium respectivement dédiées à l'acquisition des données d'entrées (par exemple image, ou vidéo) et aux calculs relatifs au réseau de neurones.

L'invention s'applique pour tout problème de classification d'objets parmi des données. Par exemple, il peut s'agir de classer des images ou des séquences audio ou des données textuelles en fonction de leur contenu.

## Revendications

1. Méthode, mise en œuvre par ordinateur, d'apprentissage automatique par transfert comprenant les étapes de :

  - Entrainer (401) un réseau de neurones artificiel ($R_S$) à résoudre un premier problème source de classification, à partir d'au moins un premier ensemble de données d'apprentissage source ($DA_S$),

  - Mettre à jour (404) les poids synaptiques de la dernière couche du réseau de neurones artificiel entrainé, à partir d'un second ensemble de données d'apprentissage cible ($DA_c$), pour résoudre un second problème cible de classification,
  - Pour chaque neurone de la dernière couche du réseau de neurones artificiel associé à une classe, lesdits poids synaptiques étant proportionnels à la moyenne centrée normalisée des représentations du second ensemble de données d'apprentissage cible ($DA_c$) extraites de la dernière couche cachée du réseau de neurones artificiel et appartenant à ladite classe.

2. Méthode selon la revendication 1 comprenant en outre une étape de remplacer (402) la dernière couche du réseau de neurones artificiel entrainé par une couche spécifique au second problème cible de classification.

3. Méthode selon la revendication 2 dans laquelle la couche spécifique est une couche basée sur la fonction softmax.

4. Méthode selon l'une quelconque des revendications précédentes dans laquelle, pour mettre à jour les poids synaptiques de la dernière couche du réseau de neurones artificiel entrainé, les données d'apprentissage cible ($DA_c$) du second ensemble sont propagées (403) de l'entrée dudit réseau jusqu'à sa dernière couche cachée de manière à pouvoir en extraire lesdites représentations.

5. Méthode selon l'une quelconque des revendications précédentes dans laquelle le réseau de neurones artificiel est entrainé pour plusieurs ensembles de données d'apprentissage source ($DA_{S1}$,..., $DA_{SN}$), afin de produire plusieurs réseaux de neurones entrainés ($R_{S1}$,..., $R_{SN}$), la mise à jour des poids synaptiques est réalisée pour chaque réseau de neurones entrainé et la méthode comprend en outre une étape (405) de sélection du réseau de neurone entrainé ($R_{ci}$) qui présente les meilleures performances pour résoudre le second problème cible de classification.

6. Méthode selon la revendication 5 dans laquelle le second ensemble de données d'apprentissage cible ($DA_c$) est de taille inférieure à un ensemble de données d'apprentissage source.

7. Méthode selon l'une quelconque des revendications 1 à 4 dans laquelle la mise à jour des poids synaptiques est réalisée pour plusieurs ensembles de données d'apprentissage cible ($DA_{C1}$,..., $DA_{CN}$), le second problème cible est identique au premier problème source et la méthode comprend en outre une étape de sélection (605) de l'ensemble de données d'apprentissage cible qui permet d'obtenir les performances les moins bonnes pour résoudre le second problème cible de classification.

8. Méthode selon la revendication 7 comprenant en outre une nouvelle étape d'entrainement du réseau de neurones artificiels à partir de l'ensemble de données d'apprentissage cible sélectionné ou d'une combinaison de l'ensemble de données d'apprentissage cible sélectionné et de l'ensemble de données d'apprentissage source.

9. Méthode selon l'une quelconque des revendications précédentes dans laquelle la dernière couche cachée du réseau de neurones artificiels comporte une fonction d'activation impaire, par exemple une fonction tangente hyperbolique.

10. Dispositif de calcul pour implémenter un réseau de neurones artificiel ayant appris à résoudre un problème cible de classification à l'aide d'une méthode de transfert d'apprentissage selon l'une quelconque des revendications précédentes.

11. Programme d'ordinateur téléchargeable depuis un réseau de communication et/ou stocké sur un support lisible par un processeur, le programme comportant des instructions pour l'exécution de la méthode selon l'une quelconque des revendications 1 à 9, lorsque le programme est exécuté par un processeur.

12. Support d'enregistrement lisible par un processeur sur lequel est enregistré un programme comportant des instructions pour l'exécution de la méthode selon l'une quelconque des revendications 1 à 9, lorsque le programme est exécuté par un processeur.

FIG 1

Fig. 1

FIG 2

Fig. 2

Fig. 3

DA$_s$

Apprentissage
problème source

R$_s$

Remplacement
dernière couche du
réseau

R$_c$

DA$_c$

Propagation données
d'apprentissage cible

Calcul poids dernière
couche

R$_c$

401

402

403

404

Fig. 4

$DA_{S1}, ..., DA_{SN}$ → Apprentissage problème source ~ 401

$R_{S1}, ..., R_{SN}$

Remplacement dernière couche des réseaux ~ 402

$R_{c1}, ..., R_{cN}$

$DA_c$ → Propagation données d'apprentissage cible ~ 403

Calcul poids dernière couche ~ 404

$R_{c1}, ..., R_{cN}$

Sélection réseau ~ 405

$R_{ci}$

Fig. 5

DA$_S$

Apprentissage
problème source

401

R$_S$

Remplacement
dernière couche des
réseaux

402

R$_c$

DA$_{c1}$, .., DA$_{cN}$

Propagation données
d'apprentissage cible

403

Calcul poids dernière
couche

404

R$_{c1}$,..., R$_{cN}$

Sélection données
cibles DAc$_i$

605

DAc$_i$

Fig. 6

Fig. 7

Europäisches
Patentamt

European
Patent Office

Office européen
des brevets

**RAPPORT DE RECHERCHE EUROPEENNE**

Numéro de la demande

**EP 21 21 3450**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2019/311258 A1 (ZHANG LEI [US] ET AL) 10 octobre 2019 (2019-10-10) * abrégé; figures 5A, 5B, 6 * * alinéa [0001] – alinéa [0005] * * alinéa [0077] – alinéa [0112] * | 1-12 | INV. G06N3/04 G06N3/08 |
| A | US 2020/134469 A1 (CHOO JIN HO [KR] ET AL) 30 avril 2020 (2020-04-30) * abrégé; figures 1-5 * * alinéa [0001] – alinéa [0011] * * alinéa [0042] – alinéa [0081] * | 1-12 | |
| A | XUHONG LI ET AL: "Explicit Inductive Bias for Transfer Learning with Convolutional Networks", ARXIV.ORG, CORNELL UNIVERSITY LIBRARY, 201 OLIN LIBRARY CORNELL UNIVERSITY ITHACA, NY 14853, 5 février 2018 (2018-02-05), XP081235499, * abrégé * * page 4, colonne 2, ligne 24 – page 7, colonne 2, ligne 22 * | 1-12 | |

**DOMAINES TECHNIQUES RECHERCHES (IPC)**

G06N

Le présent rapport a été établi pour toutes les revendications

| Lieu de la recherche | Date d'achèvement de la recherche | Examinateur |
|---|---|---|
| La Haye | 10 mai 2022 | Rousset, Antoine |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................................................
& : membre de la même famille, document correspondant

EPO FORM 1503 03.82 (P04C02)

17

## ANNEXE AU RAPPORT DE RECHERCHE EUROPEENNE
## RELATIF A LA DEMANDE DE BREVET EUROPEEN NO.

EP 21 21 3450

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-05-2022

| Document brevet cité au rapport de recherche | Date de publication | Membre(s) de la famille de brevet(s) | Date de publication |
|---|---|---|---|
| US 2019311258 A1 | 10-10-2019 | AUCUN | |
| US 2020134469 A1 | 30-04-2020 | KR 20200048474 A | 08-05-2020 |
| | | US 2020134469 A1 | 30-04-2020 |

EPO FORM P0460

Pour tout renseignement concernant cette annexe : voir Journal Officiel de l'Office européen des brevets, No.12/82